# EUROPÄISCHE PATENTSCHRIFT

(11) **EP 1 412 732 B1**
(45) Veröffentlichungstag und Bekanntmachung des Hinweises auf die Patenterteilung: **07.06.2006**
(21) Anmeldenummer: 02754323.0
(22) Anmeldetag: 06.07.2002
(51) Int. Cl.: G01N 27/22

(54) **HALBLEITERBAUELEMENT ALS KAPAZITIVER FEUCHTESENSOR, SOWIE EIN VERFAHREN ZUR HERSTELLUNG DES HALBLEITERBAUELEMENTS**
SEMICONDUCTOR COMPONENT AND METHOD FOR PRODUCING THE SAME
COMPOSANT SEMI-CONDUCTEUR ET PROCEDE PERMETTANT DE LE PRODUIRE

(30) Priorität: 18.07.2001 DE 10134938
(43) Veröffentlichungstag der Anmeldung: 28.04.2004
(73) Patentinhaber: ROBERT BOSCH GMBH, 70442 Stuttgart (DE)
(72) Erfinder: BENZEL, Hubert, 72124 Pliezhausen (DE); WEBER, Heribert, 72622 Nuertingen (DE); SCHAEFER, Frank, 72070 Tuebingen (DE)
(86) Internationale Anmeldenummer: PCT/DE2002/002481
(87) Internationale Veröffentlichungsnummer: WO 2003/009334

(56) Entgegenhaltungen:
- GB-A- 2 043 908
- US-A- 4 057 823
- US-A- 4 347 550
- O'HALLORAN G M ET AL: "The effect of additives on the adsorption properties of porous silicon" SENSORS AND ACTUATORS A, ELSEVIER SEQUOIA S.A., LAUSANNE, CH, Bd. 61, Nr. 1-3, 1. Juni 1997 (1997-06-01), Seiten 415-420, XP004092259 ISSN: 0924-4247
- RITTERSMA Z M ET AL: "A MONITORING INSTRUMENT WITH CAPACITIVE POROUS SILICON HUMIDITY SENSORS" SMART MATERIALS AND STRUCTURES, IOP PUBLISHING LTD., BRISTOL, GB, Bd. 9, Nr. 3, Juni 2000 (2000-06), Seiten 351-356, XP000935820 ISSN: 0964-1726
- O'HALLORAN G M ET AL: "A bulk micromachined humidity sensor based on porous silicon" 1997 INTERNATIONAL CONFERENCE ON SOLID-STATE SENSORS AND ACTUATORS. DIGEST OF TECHNICAL PAPERS. TRANSDUCERS 97. CHICAGO, IL, JUNE 16 - 19, 1997. SESSIONS 3A1 - 4D3. PAPERS NO. 3A1.01 - 4D3.14P, INTERNATIONAL CONFERENCE ON SOLID-STATE SENSORS AND ACTU, Bd. 2, 16. Juni 1997 (1997-06-16), Seiten 563-566, XP010240538 ISBN: 0-7803-3829-4
- RITTERSMA Z M ET AL: "A novel surface-micromachined capacitive porous silicon humidity sensor" SENSORS AND ACTUATORS B, ELSEVIER SEQUOIA S.A., LAUSANNE, CH, Bd. 68, Nr. 1-3, 25. August 2000 (2000-08-25), Seiten 210-217, XP004216616 ISSN: 0925-4005

## Beschreibung

### Stand der Technik

Die Erfindung aus von einem kapazitiven sensor, wie insbesondere ein Feuchtesensor, und von einem Verfahren zur Herstellung eines kapazitiven sensors nach der Gattung des betreffenden unabhängigen Patentanspruchs.

Bekannte mehrschichtige Halbeitierbauelemente zur Ermittlung der Menge und/oder Art eines auf das Halbleiterbauelement einwirkenden weisen eine Kondensatoranordnung auf. Auf eine zwischen einer ersten und einer zweiten Elektrode befindlichen Schicht wirkt das Medium ein. Im Falle eines Halbleiterbauelements, das einen Feuchtesensor bildet, ist dies die Feuchtigkeit der das Halbleiterbauelement umgebenden Luft. Bei einem bekannten Feuchtesensor dringt Luftfeuchtigkeit durch eine strukturierte Deckelelektrode in die feuchteempfindliche Schicht ein und ändert die Dielektrizitätszahl dieser Schicht. Dies führt zu einer feuchteabhängigen Änderung der Kapazität des durch die zwei Elektroden und die feuchteempfindliche Schicht gebildeten Kondensators, die ausgewertet wird.

In der Schrift von G M O'Halloran et al "The effects of additives on the absorption properties of porous silicon", Sensors and Actuators A, 61, (1997) ist ein kapazitiver Feuchtesensor mit einem Siliziumsubstrat, einer ersten und einer zweiten Elektrode sowie einer Zwischenschicht aus porösem Silizium, deren Poren für die zu untersuchende feuchte Luft zugänglich sind, offenbart. Die erste Elektrode ist hierbei ein Aluminium-Rückseitenkontakt, und die zweite Elektrode ist eine Deckelelektrode aus deponiertem Gold.

In der Schrift von M Z Rittersma et al, "A novel surface-micromachined capacitive porous silicon humidity sensor", Sensors and Actuators B, 68 (2000) ist ebenfalls ein kapazitiver Feuchtesensor mit einer Zwischenschicht aus porösem Silizium offenbart. Die Schrift zeigt weiter Elektroden in einer dünnen Metallschicht in Form von Platten, Gitter und in Interdigitalanordnung. Der Sensor weist zur Regeneration einen Heizwiderstand auf.

Die britische Patentanmeldung GB 2 043 908 A zeigt einen weiteren kapazitiven Feuchtesensor mit einem dotierten Siliziumsubstrat als erster Elektrode, und einer Metallschicht als zweiter Elektrode. Zwischen den beiden Elektroden befindet sich eine Zwischenschicht aus hygroskopischem Siliziumoxid.

### Zeichnungen

Der erfindungsgemäße kapazitive sensor und dessen Herstellungsverfahren wird nachfolgend am Beispiel eines Feuchtesensors unter Verwendung von schematischen, nicht notwendigerweise maßstäblichen Zeichnungen näher erläutert, wobei gleiche Bezugszeichen gleiche oder gleichwirkende Schichten oder Teile bezeichnen. Es zeigt:
- Fig. 1: einen bekannten Feuchtesensor mit einer Bodenelektrode, einer strukturierten Deckelelektrode und einer zwischen beiden Elektroden befindlichen, überätzten Polymer-Schicht- im Querschnitt;
- Fig. 2: die Vorstufe einer ersten Ausführungsform eines erfindungsgemäßen Feuchtesensors - im Querschnitt;
- Fig. 3: eine erste Weiterbildung der in Fig. 2 dargestellten ersten Ausführungsform - im Querschnitt;
- Fig. 4: eine zweite Weiterbildung der in Fig. 2 dargestellten ersten Ausführungsform - im Querschnitt;
- Fig. 5: ein Ausführungsbeispiel eines mit elektrischen Anschlüssen versehenen Feuchtesensors der Figuren 3 oder 4 - im Querschnitt sowie in Draufsicht;
- Fig. 6: eine erste Variante einer zweiten Ausführungsform eines erfindungsgemäßen Feuchtesensors mit zwei auf. gleicher Höhe angeordneten Elektroden und einer darüber befindlichen Abschirmelektrode - im Querschnitt; Querschnitt;
- Fig. 9: eine erste Ausführungsform für die in der Figur 6 dargestellten Bodenelektroden in Form eines Plattenkondensators - in Draufsicht;
- Fig. 10: eine zweite Ausführungsform für die in der Figuren 6 dargestellten Bodenelektroden in Form einer Interdigitalstruktur, die durch zwei ineinandergreifende Kammelektroden gebildet ist - in Draufsicht; und
eine netzförmige obere Elektrode und eine netzförmige untere Elektrode aufweist - im Querschnitt.

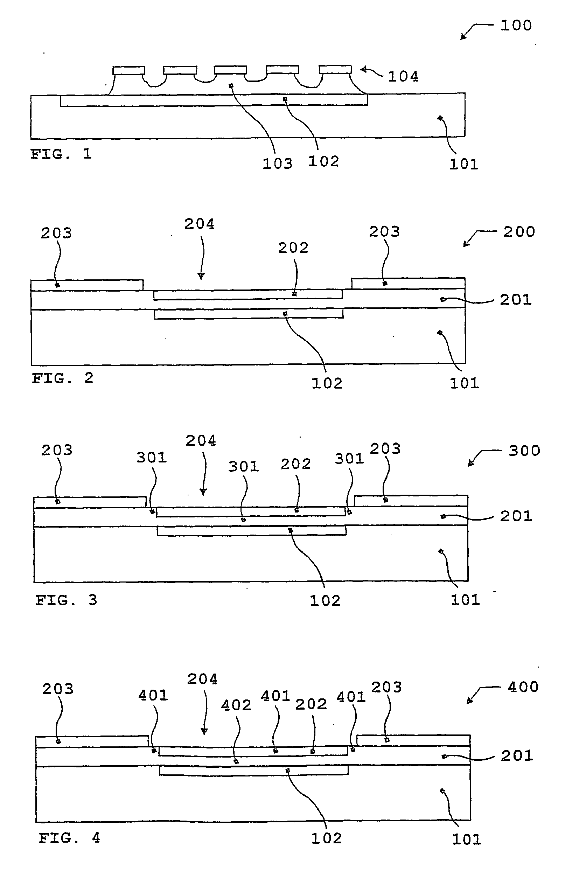

Der in Fig. 1 dargestellte bekannte Feuchtesensor 100 weist ein Silizium-Substrat 101, eine Bodenelektrode bzw. untere Elektrode 102, die durch einen geeignet dotierten Bereich in dem Silizium-Substrat 101 gebildet ist, eine überätzte Polymer-Schicht 103 und eine strukturierte Deckelelektrode 104 auf. Über die Strukturierung bzw. Öffnungen der strukturierten Deckelelektrode 104 gelangt Luft an die Polymer-Schicht 103. Die in der Luft enthaltene Feuchtigkeit gelangt an die Polymer-Schicht 102 und beeinflußt deren Dielektrizitätszahl. Die Dielektrizitätszahl der Polymer-Schicht 103 kann über die durch die untere Elektrode 102, die Polymer-Schicht 103 und die strukturierte Deckelelektrode 104, die einen Plattenkondensator bilden, bestimmt werden. Über die Dielektrizitätszahl wird die aktuelle Luftfeuchtigkeit ermittelt. In nachteiliger Weise führen sich verändernde Luftfeuchtigkeiten zu einem Schrumpfen bzw. Quellen der Polymer-Schicht, was nach einiger Zeit zu einer mechanischen Zerstörung des Feuchtesensors 100 führen kann. Ferner ist der Aufbau eines Feuchtesensors unter Verwendung eines Polymers für ein Massenprodukt, insbesondere im Automobilbereich, recht aufwendig und damit teuer.

Die in Fig. 2 dargestellte Vorstufe 200 einer ersten Ausführungsform eines erfindungsgemäßen Feuchtesensors weist ein Silizium-Substrat 101, eine durch einen dotierten Bereich gebildete Bodenelektrode bzw. untere Elektrode 102, eine auf der Oberseite des Siliziumsubstrats 101 und dem dotierten Bereich 102 abgeschiedene, sogenannte Zwischenschicht aus Silizium 201, eine durch einen dotierten Bereich gebildete Deckelelektrode bzw. obere Elektrode 202 und eine durch eine Maskenschicht 203 gebildete Maskierung der Oberseite der Zwischenschicht 201 auf. Die Maskierung der Oberseite der Zwischenschicht 201 ist dergestalt, daß eine Ätzöffnung 204 über der unteren Elektrode 102, der Zwischenschicht 201 und der oberen Elektrode 202 gebildet ist. Die Vorstufe 200 ist durch bekannte Silizium-Halbleiterprozesse erzeugt worden, so daß hierauf nicht näher eingegangen werden muß.

Zur Herstellung einer perforierten bzw. porösen Deckelelektrode 202 sowie einer perforierten bzw. porösen Zwischenschicht 201, jeweils vorzugsweise beschränkt auf den Bereich unterhalb der Ätzöffnung 204, wird die in Fig. 2 dargestellte Vorstufe 200 bevorzugt in ein Ätzmedium gegeben, das insbesondere Flußsäure aufweist. Zwischen der Oberseite der Vorstufe 200 und der Unterseite der Vorstufe 200 wird eine elektrische Spannung angelegt. Die elektrische Spannung verursacht einen Stromfluß in dem Ätzmedium, das Poren bzw. Öffnungen in der Deckelelektrode 202 und nachfolgend in der Zwischenschicht 201, jeweils weitgehend beschränkt auf den Bereich unterhalb der Ätzöffnung 204, erzeugt. Das Ergebnis des elektrochemischen Ätzens unter Verwendung von Flußsäure ist die in Fig. 3 dargestellte erste Weiterbildung 300 der in Fig. 2 dargestellten ersten Ausführungsform. Die Verfahrensparameter sind beim Ätzen derart eingestellt worden, daß die Porosität des betreffenden Bereichs der Deckelelektrode 202 und des betreffenden Bereichs 301 der Zwischenschicht 201 weitgehend gleich ist. Unter Porosität soll insbesondere das Verhältnis von Hohlraum bzw. von außen zugänglichem Raum, der durch die in den betreffenden Bereichen gebildeten Poren gegeben ist, zu dem Volumen des verbliebenen Material der Schicht, bezogen auf eine Volumeneinheit, verstanden werden.

Die Herstellung einer Deckelelektrode 202, deren Porosität weitgehend gleich der Porosität der darunter bzw. daneben befindlichen Zwischenschicht 201 in den betreffenden Bereichen 301 ist, wird erfindungsgemäß bevorzugt dadurch erreicht, daß die Stromstärke des durch das Ätzmedium fließenden Stroms während der Erzeugung der Poren in der Deckelelektrode 202 und nachfolgend während der Erzeugung der Poren in der darunter befindlichen Zwischenschicht 201 weitgehend identisch ist. Falls erforderlich, ist bei der Einstellung der Stromstärke zur Erzeugung der Porosität in der Deckelelektrode 202 zu berücksichtigen, daß der Bereich 202 abweichend von der Zwischenschicht 201 dotiert ist. Die Tiefe der porösen Ätzung wird bei ansonsten konstanten Ätzparametern bevorzugt durch die Zeitdauer vorbestimmt, während der der elektrische Strom durch das Ätzmedium fließt.

Der in Fig. 3 dargestellte erfindungsgemäße Feuchtesensor bildet einen Kondensator mit einer porösen, dünnen oberen Elektrode 202 und einem porösen Bereich 301 in der Zwischenschicht 201 zwischen der oberen Elektrode 202 und der unteren Elektrode 102. Der poröse Bereich 301 der Zwischenschicht 201 stützt die obere Elektrode 202. Durch die feinen Poren der dünnen oberen Elektrode 202, in bezug auf die Dicke der Zwischenschicht 201, kann feuchte Luft in den porösen Bereich 301 der Zwischenschicht 201 gelangen. Damit ändert sich die Dielektrizitätszahl und somit die auswertbare Kapazität zwischen der oberen und unteren Elektrode in Abhängigkeit von der konkreten Luftfeuchtigkeit.

Möglich ist auch die gezielte Ausnutzung der Abhängigkeit der Form der Porosität von der Dotierung. Beispielsweise würde man durch die Verwendung einer n-Dotierung für die obere Elektrode senkrechte Poren erhalten und durch Verwendung einer p-Dotierung für die Zwischenschicht fein verästelte Poren.

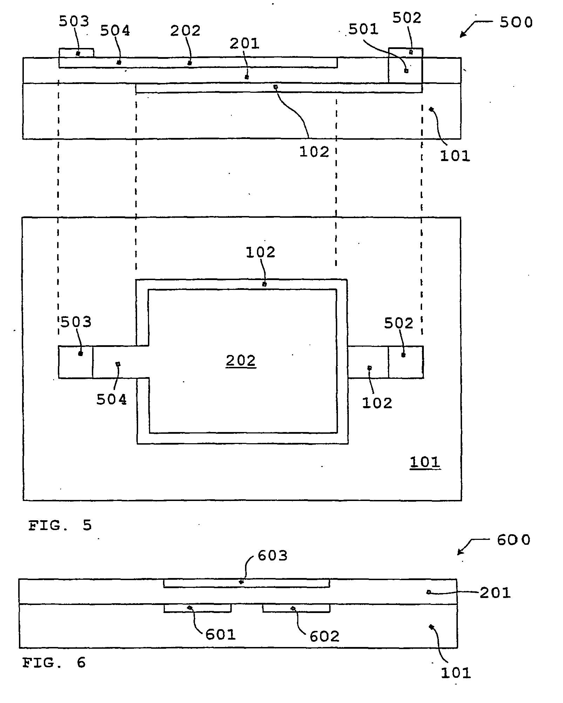

Wie später im Zusammenhang mit Fig. 5 näher erläutert werden wird, lassen sich die beiden Elektroden über dotierte Bereiche in Form von Leiterbahnen mit Kontaktpads bzw. Kontaktflächen oder mit einer auf dem Sensor integrierten Schaltung (nicht dargestellt) elektrisch verbinden. Zusätzlich kann auf dem Sensor eine Referenzkapazität hergestellt sein, die z. B. beim anschließenden Metallisierungs-Schritt ganzflächig mit Metall bedeckt wird. Die Bedeckung kann alternativ auch durch eine separat aufgebrachte Passivierung vorgenommen werden. Dadurch ist die Referenzkapazität nicht mehr feuchteempfindlich.

Fig. 4 zeigt eine zweite Weiterbildung der in Fig. 2 dargestellten Vorstufe einer ersten Ausführungsform. Im Unterschied zu der in Fig. 3 dargestellten ersten Weiterbildung der in Fig. 2 dargestellten Vorstufe einer ersten Ausführungsform, weist der in Fig. 4 dargestellte erfindungsgemäße Feuchtesensor im Bereich 401 der oberen Elektrode 202 bzw. der oberen Zwischenschicht 201 eine Porosität auf, die deutlich geringer als die Porosität der unter der oberen Elektrode 202 befindlichen Zwischenschicht 201 ist. Um dies zu erreichen, wird die obere Elektrode 202 bzw. der entsprechende, dotierte Bereich, der die obere Elektrode bildet, zeitgesteuert durch Anlegen einer elektrischen Spannung in Flußsäure porös geätzt. Dabei wird mit einer geringen Stromdichte gearbeitet. Dies bewirkt eine geringe Porosität. Nachdem die Zwischenschicht 201 im Bereich der oberen Elektrode 202 porös geätzt worden ist, wird die Stromdichte deutlich erhöht. Die darunterliegende Zwischenschicht wird nun ebenfalls porös geätzt, jedoch mit einer deutlich höheren Porosität im Vergleich zur Porosität der oberen Elektrode 202. Die porös geätzten Bereiche werden lateral durch die Maskenschicht 203 begrenzt. Im Unterschied zu der ersten Weiterbildung ist die Zwischenschicht 201 deutlich poröser als der dotierte Bereich bzw. die dotierte Schicht, die die obere Elektrode 202 bildet - wie bereits ausgeführt. An dieser bevorzugten Ausführungsform der Erfindung ist von Vorteil, daß sich die Änderung der Dielektrizitätszahl bei einer Änderung der Luftfeuchtigkeit, die auf den erfindungsgemäßen Feuchtesensor einwirkt, primär - wie gewünscht - in der Zwischenschicht 201 bzw. im Zwischenraum zwischen der oberen und der unteren Elektrode vollzieht. Bei dem erfindungsgemäßen porösen Ätzen ist zu beachten, daß das poröse Restmaterial in Zwischenraum zwischen der oberen und der unteren Elektrode immer noch so stabil ist, daß es die obere Elektrode ausreichend mechanisch stützt.

Fig. 5 zeigt das Ausführungsbeispiel eines mit elektrischen Anschlüssen versehenen Feuchtesensors 500 der Figuren 3 oder 4 im Querschnitt sowie in Draufsicht. Die untere Elektrode 102 ist über eine geeignete, bekannte Durchkontaktierung 501 mit einer Kontaktfläche 502 zu deren externer Kontaktierung verbunden. Die obere Elektrode 202 ist über eine geeignete, bekannte Kontaktbahn 504 mit einer Kontaktfläche 503 zu deren externer Kontaktierung verbunden. Über die externen Kontaktierungen wird die Kapazität des durch die obere Elektrode 202, die untere Elektrode 102 und die dazwischen befindliche poröse Schicht 301 oder 402 gebildeten Kondensators bestimmt. Wie bereits ausgeführt, ist die Dielektrizitätszahl der zwischen den beiden Elektroden befindlichen porösen Schicht von dem konkreten Medium abhängig, das von außen in die Poren der porösen Schicht eindringen kann. Ebensb ist die Dielektrizitätszahl der porösen Schicht von der Konzentration des betreffenden Mediums abhängig. Beim hier beschriebenen Beispiel eines Feuchtesensors, dringt Luftfeuchtigkeit über die poröse obere Elektrode 202 in den porösen Bereich 301 bzw. 402 ein, so daß sich die Kapazität des Kondensators ändert. Diese Änderung wird einer Auswerteschaltung (nicht dargestellt) über die Kontaktflächen 502 und 503 zugeführt, die die Kapazitätsänderung und die sie hervorrufende veränderte Luftfeuchtigkeit ermittelt bzw. quantitativ bestimmt. Hierzu kann beispielsweise eine Referenzkapazität verwendet werden, die ebenfalls auf dem kapazitiven sensor integriert ist (nicht dargestellt).

Während der obere Teil der Fig. 5 den Feuchtesensor 500 im Querschnitt zeigt, ist der Feuchtesensor 500 im unteren Teil der Fig. 5 in Draufsicht dargestellt. Der Draufsicht des Feuchtesensors 500 ist entnehmbar, daß die untere Elektrode 102 und die obere Elektrode 202 einen rechteckigen Umriß aufweisen und parallel höhenversetzt zueinander angeordnet sind. Ihre Umrisse decken sich weitgehend.

Die in Fig. 6 dargestellte erste Variante 600 einer zweiten Ausführungsform eines erfindungsgemäßen Feuchtesensors weist zwei auf gleicher Höhe angeordnete Elektroden 601 und 602 auf. Dem in Fig. 6 dargestellten Querschnitt der ersten Variante bzw. dem kapazitiven sensor 600 ist entnehmbar, daß die erste Elektrode 601 und die zweite Elektrode 602 von einer Abschirmelektrode 603 abgedeckt sind. Die Abschirmelektrode 603, der Bereich der Zwischenschicht 201 unter der Abschirmelektrode 603 und der Bereich zwischen der ersten Elektrode 601 und der zweiten Elektrode 602 ist in der beschriebenen Weise porös gestaltet worden. Über die Poren in der Abschirmelektrode 603, den porösen Bereich (nicht dargestellt) der Zwischenschicht 201 und den porösen Bereich (nicht dargestellt) zwischen den Elektroden 601 und 602 gelangt bei dem hier vorgestellten Beispiel eines Feuchtesensors Luftfeuchtigkeit zwischen die erste Elektrode 601 und die zweite Elektrode 602. Dadurch ändert sich die Dielektrizitätszahl des porösen Bereichs zwischen der ersten Elektrode 601 und der zweiten Elektrode 602, wodurch sich die Kapazität des beschriebenen Kondenstors ändert. Die Veränderung der Kapazität wird in bekannter Weise zur quantitativen Bestimmung der Luftfeuchtigkeit ausgewertet.

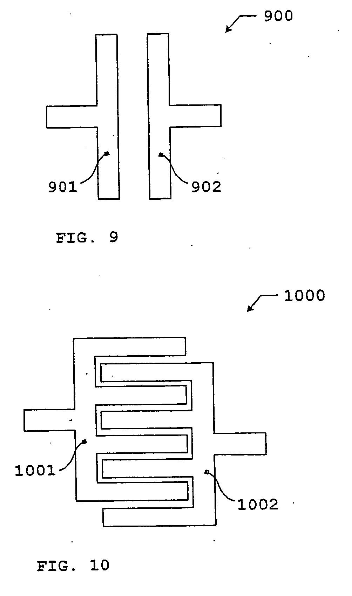

Fig. 9 zeigt eine erste Ausführungsform 900 für die in der Figur 6 im Querschnitt dargestellten Elektroden, die einen Plattenkondensator bilden. Der Plattenkondensator 900 hat eine erste Bodenelektrode 901 und eine zweite Bodenelektrode 902.

Fig. 10 zeigt eine zweite Ausführungsform für die in der Figur 6 im Querschnitt dargestellten Elektroden. Diese haben die Form von zwei ineinandergreifenden Kammelektroden 1001 und 1002, die eine sogenannte Interdigitalstruktur 1000 bilden.

Bei dem erfindungsgemäßen kapazitiven Sensor ist vorgesehen, dass die erste und/oder zweite Elektrode zumindest teilweise durch eine geeignet dotierte Halbleiterschicht und /oder durch eine metallische Schicht gebildet ist bzw. sind.

### Bezugszeichenliste:

- 100: bekannter Feuchtesensor
- 101: Silizium-Substrat
- 102: Bodenelektrode, untere Elektrode, gebildet durch geeignet dotierten Bereich
- 103: überätzte Polymer-Schicht
- 104: strukturierte Deckelelektrode, obere Elektrode

- 200: Vorstufe einer ersten Ausführungsform eines erfindungsgemäßen Feuchtesensors
- 201: Silizium-Zwischenschicht
- 202: Deckelelektrode, obere Elektrode, dotierter Bereich
- 203: Maskenschicht
- 204: Ätzöffnung

- 300: erste Variante der in Fig. 2 dargestellten ersten Ausführungsform
- 301: poröser Bereich in der Zwischenschicht 201, der sich im gesamten Bereich unter der Ätzöffnung 204 bis hin zur Bodenelektrode 102 erstreckt

- 400: zweite Variante der in Fig. 2 dargestellten ersten Ausführungsform
- 401: Bereich mit geringer Porosität, der sich im Bereich unter der Ätzöffnung 204 bis etwa zur Unterseite der Deckelelektrode 202 hin erstreckt
- 402: Bereich mit großer Porosität, in Bezug auf den Bereich 401, der sich im Bereich unter der Ätzöffnung 204 bis etwa zur Unterseite der Bodenelektrode 102 hin erstreckt

- 500: Ausführungsbeispiel eines mit elektrischen Anschlüssen versehenen Feuchtesensors der Figuren 3 oder 4 im Querschnitt sowie in Draufsicht
- 501: Durchkontaktierung
- 502: Kontaktfläche zur Kontaktierung der Bodenelektrode
- 503: Kontaktfläche zur Kontaktierung der Deckelelektrode
- 504: Kontaktbahn zur Kontaktierung der Deckelelektrode

- 600: erste Variante einer zweiten Ausführungsform eines erfindungsgemäßen Feuchtesensors mit zwei auf gleicher Höhe angeordneten Elektroden und einer darüber befindlichen Abschirmelektrode
- 601: erste Bodenelektrode
- 602: zweite Bodenelektrode
- 603: Abschirmelektrode

- 900: eine erste Ausführungsform für die in den Figuren 6 bis 8 dargestellten Elektroden in Form eines Plattenkondensators
- 901: erste Bodenelektrode
- 902: zweite Bodenelektrode

- 1000: eine zweite Ausführungsform für die in den Figuren 6 bis 8 dargestellten Elektroden in Form einer Interdigitalstruktur, die durch zwei ineinandergreifende Kammelektroden gebildet ist
- 1001: erste Bodenelektrode in Form eines Kamms
- 1002: zweite Bodenelektrode in Form eines Kamms

## Patentansprüche

1. Kapazitiver Sensor mit einem Halbleitersubstrat (101), einer unteren Elektrode (102), einer oberen Elektrode (202) und einer ersten Schicht (201),
- wobei die obere Elektrode (202) und die erste Schicht (201) für ein auf das Halbleiterbauelement von außen einwirkendes Medium zugänglich sind,
- wobei die erste Schicht (201) zumindest teilweise zwischen der unteren und der oberen Elektrode angeordnet ist,
- wobei die erste Schicht (201) Poren (301) aufweist, in die das Medium zumindest teilweise gelangen kann,
**dadurch gekennzeichnet, dass**
wenigstens eine der Elektroden (102, 202) durch eine geeignet dotierte Halbleiterschicht gebildet ist, und dass die obere Elektrode (202) durch eine dotierte Halbleiterschicht gebildet ist, die eine zweite poröse Schicht (401) darstellt.

2. Kapazitiver Sensor nach Anspruch 1, **dadurch gekennzeichnet, dass** das Medium gasförmig oder flüssig ist, wie insbesondere Feuchtigkeit aufweisende Luft.

3. Kapazitiver Sensor nach Anspruch 1, **dadurch gekennzeichnet, dass** das Halbleitersubstrat (101) aus Silizium besteht.

4. Kapazitiver Sensor nach Anspruch 1, **dadurch gekennzeichnet, dass** die Porosität der zweiten Schicht (401), das heißt das Verhältnis des Volumens von Poren zu Material, geringer als die Porosität der ersten porösen Schicht (301) ist.

5. Kapazitiver Sensor nach Anspruch 1 oder 4, **dadurch gekennzeichnet, dass** das Medium über die zweite poröse Schicht (401) ganz oder teilweise an die erste poröse Schicht (301) gelangt.

6. Kapazitiver Sensor nach einem der vorhergehenden Ansprüche, **dadurch gekennzeichnet, dass** zwei untere Elektroden (601, 602) im wesentlichen auf gleicher Höhe mit einem Abstand zueinander angeordnet sind.

7. Kapazitiver Sensor nach Anspruch 6, **dadurch gekennzeichnet, dass** die beiden unteren Elektroden (1001, 1002) eine Interdigitalstruktur (1000) bilden.

8. Kapazitiver Sensor nach einem der Ansprüche 6 oder 7, **dadurch gekennzeichnet, dass** die obere Elektrode eine Abschirmelektrode (603) ist.

9. Kapazitiver Sensor nach einem der vorhergehenden Ansprüche, **dadurch gekennzeichnet, dass** der kapazitive Sensor einen Feuchtesensor (200, 300, 400, 500, 600) darstellt.

10. Verfahren zur Herstellung eines kapazitiven Sensors nach einem der Ansprüche 1 bis 9, wobei
- die erste poröse Schicht (301) durch Ätzen mit wenigstens einem Ätzmedium gebildet wird,
**dadurch gekennzeichnet,**
- **dass** zur Ausbildung wenigstens einer der Elektroden (102, 202) eine Halbleiterschicht geeignet dotiert wird, und
- **dass** eine obere dotierte Halbleiterschicht durch Ätzen in eine zweite poröse Schicht (401) umgebildet wird.

11. Verfahren nach Anspruch 10, **dadurch gekennzeichnet, dass** das Ätzmedium wenigstens teilweise aus Flußsäure besteht.

12. Verfahren nach Anspruch 10, **dadurch gekennzeichnet, dass** das Ätzmedium mit wenigstens Zusatz versehen wird, wie einem Zusatz zur Verringerung der Blasenbildung, zur Verbesserung der Benetzung und/oder zur Verbesserung der Trocknung.

13. Verfahren nach Anspruch 12, **dadurch gekennzeichnet, dass** als Zusatz ein Alkohol wie beispielsweise Äthanol verwendet wird und dass die Volumenkonzentration des Zusatzes, ca. 30% bis ca. 90%, beträgt.

14. Verfahren nach Anspruch 10 bis 13, **dadurch gekennzeichnet, dass** die erste und/oder zweite poröse Schicht (301, 401) unter Anlegen eines elektrischen Feldes zwischen der Oberseite und der Unterseite des Halbleiterbauelements und der Einstellung eines elektrischen Stroms gebildet wird, der durch das Ätzmedium fließt.

15. Verfahren nach einem der Ansprüche 10 bis 14, **dadurch gekennzeichnet, dass** das Maß der Porosität der ersten und/oder zweiten porösen Schicht (301, 401) und/oder die Ausdehnung der Poren der ersten und/oder zweiten porösen Schicht durch Variation von einem oder mehreren der Prozessparameter Stromdichte in dem Ätzmedium, Flußsäure-Konzentration in dem Ätzmedium, Zusatz zum Ätzmedium, Temperatur, Dotierung, Zeitdauer des Stromflusses gesteuert wird.

## Claims

1. Capacitive sensor having a semiconductor substrate (101), a bottom electrode (102), a top electrode (202) and a first layer (201),
- the top electrode (202) and the first layer (201) being accessible to a medium which acts on the semiconductor component from the outside,
- the first layer (201) being arranged at least partially between the bottom electrode and the top electrode,
- the first layer (201) having pores (301) which the medium can at least partially enter,
**characterized in that**
at least one of the electrodes (102, 202) is formed by a suitably doped semiconductor layer, and **in that** the top electrode (202) is formed by a doped semiconductor layer which represents a second porous layer (401).

2. Capacitive sensor according to Claim 1, **characterized in that** the medium is gaseous or liquid, such as in particular air containing moisture.

3. Capacitive sensor according to Claim 1, **characterized in that** the semiconductor substrate (101) consists of silicon.

4. Capacitive sensor according to Claim 1, **characterized in that** the porosity of the second layer (401), i.e. the ratio of the volume of pores to material, is less than the porosity of the first porous layer (301).

5. Capacitive sensor according to Claim 1 or 4, **characterized in that** the medium passes partially or completely via the second porous layer (401) to the first porous layer (301).

6. Capacitive sensor according to one of the preceding claims, **characterized in that** two bottom electrodes (601, 602) are arranged at substantially the same height and at a distance from one another.

7. Capacitive sensor according to Claim 6, **characterized in that** the two bottom electrodes (1001, 1002) form an interdigitated structure (1000).

8. Capacitive sensor according to either of Claims 6 and 7, **characterized in that** the top electrode is a shielding electrode (603).

9. Capacitive sensor according to one of the preceding claims, **characterized in that** the capacitive sensor constitutes a moisture sensor (200, 300, 400, 500, 600).

10. Process for producing a capacitive sensor according to one of Claims 1 to 9, in which
- the first porous layer (301) is formed by etching with at least one etching medium,
**characterized**
- **in that** a semiconductor layer is suitably doped to form at least one of the electrodes (102, 202), and
- **in that** a top doped semiconductor layer is converted by etching into a second porous layer (401).

11. Process according to Claim 10, **characterized in that** the etching medium at least partially comprises hydrofluoric acid.

12. Process according to Claim 10, **characterized in that** the etching medium is provided with at least one additive, such as an additive for reducing the formation of bubbles, for improving the wetting and/or for improving the drying.

13. Process according to Claim 12, **characterized in that** the additive used is an alcohol, such as for example ethanol, and **in that** the volume concentration of the additive is approx. 30% to approx. 90%.

14. Process according to Claims 10 to 13, **characterized in that** the first and/or second porous layer (301, 401) is formed by applying an electric field between the top side and the underside of the semiconductor component and setting an electric current which flows through the etching medium.

15. Process according to one of Claims 10 to 14, **characterized in that** the degree of porosity of the first and/or second porous layer (301, 401) and/or the extent of the pores in the first and/or second porous layer is controlled by varying one or more of the process parameters current density in the etching medium, hydrofluoric acid concentration in the etching medium, additive added to the etching medium, temperature, doping, duration of the flow of current.

## Revendications

1. Capteur capacitif comportant un substrat semi-conducteur (101), une électrode (102) et une électrode supérieure (202) ainsi qu'une première couche (201),
- l'électrode supérieure (202) et la première couche (201) étant accessibles à un milieu agissant de l'extérieur sur le composant semi-conducteur,
- la première couche (201) étant située au moins en partie entre l'électrode inférieure et l'électrode supérieure,
- la première couche (201) comportant des pores (301) dans lesquels le milieu peut arriver au moins en partie,
**caractérisé en ce qu'**
au moins l'une des électrodes (102, 202) est formée par une couche semi-conductrice à dopage approprié et
l'électrode supérieure (202) est formée par une couche semi-conductrice dopée constituant une seconde couche poreuse (401).

2. Capteur capacitif selon la revendication 1,
**caractérisé en ce que**
le milieu est gazeux ou liquide, notamment de l'air humide.

3. Capteur capacitif selon la revendication 1,
**caractérisé en ce que**
le substrat semi-conducteur (101) est en silicium.

4. Capteur capacitif selon la revendication 1,
**caractérisé en ce que**
la porosité de la seconde couche (401), c'est-à-dire le rapport du volume des pores à la matière, est inférieure à la porosité de la première couche poreuse (301).

5. Capteur capacitif selon la revendication 1 ou 4,
**caractérisé en ce que**
le milieu arrive totalement ou en partie dans la première couche poreuse (301) à partir de la seconde couche poreuse (401).

6. Capteur capacitif selon l'une des revendications précédentes,
**caractérisé par**
deux électrodes inférieures (601, 602) situées pratiquement au même niveau écartées l'une de l'autre.

7. Capteur capacitif selon la revendication 6,
**caractérisé en ce que**
les deux électrodes inférieures (1001, 1002) forment une structure in-terdigitée (1000).

8. Capteur capacitif selon l'une des revendications 6 ou 7,
**caractérisé en ce que**
l'électrode supérieure est une électrode écran (603).

9. Capteur capacitif selon l'une des revendications précédentes,
**caractérisé en ce que**
le capteur capacitif est un capteur d'humidité (200, 300, 400, 500, 600).

10. Procédé de fabrication d'un capteur capacitif selon l'une des revendications 1 à 9,
- la première couche poreuse (301) étant formée par gravure chimique à l'aide d'au moins un milieu de gravure,
**caractérisé en ce que**
- pour former au moins l'une des électrodes (102, 202) on dope de manière appropriée une couche semi-conductrice et
- on transforme une couche semi-conductrice supérieure, dopée, par gravure en une seconde couche poreuse (401).

11. Procédé selon la revendication 10,
**caractérisé en ce que**
l'agent de gravure est au moins en partie constitué par de l'acide fluorhydrique.

12. Procédé selon la revendication 10,
**caractérisé en ce que**
l'agent de gravure comporte au moins un additif tel qu'un additif pour diminuer la formation de bulles, pour améliorer la mouillabilité et/ou pour améliorer le séchage.

13. Procédé selon la revendication 12,
**caractérisé en ce que**
l'additif est un alcool tel que par exemple de l'éthanol et la concentration volumique de l'additif représente entre 30 et 90 % environ.

14. Procédé selon les revendications 10 à 13,
**caractérisé en ce que**
la première et la seconde couche poreuse (301, 401) se forment par application d'un champ électrique entre la couche supérieure et la couche inférieure du composant semi-conducteur et par réglage d'un courant électrique traversant l'agent de gravure.

15. Procédé selon l'une des revendications 10 à 14,
**caractérisé en ce que**
la mesure de la porosité de la première et/ou de la seconde couche poreuse (301, 401) et/ou l'extension des pores de la première et/ou de la seconde couche poreuse se commandent par variation d'un ou plusieurs paramètres du procédé, à savoir : densité du courant dans l'agent de gravure, concentration de l'acide fluorhydrique dans l'agent de gravure, additif à l'agent de gravure, température, dopage, durée du passage du courant.
